# EUROPÄISCHE PATENTSCHRIFT

(11) **EP 3 135 610 B1**
(45) Veröffentlichungstag und Bekanntmachung des Hinweises auf die Patenterteilung: **01.05.2019**
(21) Anmeldenummer: 15182275.6
(22) Anmeldetag: 25.08.2015
(51) Int. Cl.: B65G 1/08, B65G 47/88

(54) **KOMMISSIONIERVORRICHTUNG UND VERFAHREN ZUM BETREIBEN EINER KOMMISSIONIERVORRICHTUNG**
PICKING DEVICE AND METHOD FOR OPERATING A PICKING DEVICE
DISPOSITIF DE PREPARATION DE COMMANDES ET PROCEDE DE FONCTIONNEMENT D'UN DISPOSITIF DE PREPARATION DE COMMANDES

(43) Veröffentlichungstag der Anmeldung: 01.03.2017
(73) Patentinhaber: Becton Dickinson Rowa Germany GmbH, 53539 Kelberg (DE)
(72) Erfinder: HELLENBRAND, Christoph, 56761 Kaifenheim (DE)
(74) Vertreter: Zenz Patentanwälte Partnerschaft mbB

(56) Entgegenhaltungen:
- EP-A1- 1 669 308
- EP-A1- 2 093 166
- EP-A1- 2 287 814
- EP-A1- 2 727 501
- CN-A- 103 738 633
- CN-A- 103 895 998
- reuschmarcom: "Consis E robot by Willach Pharmacy Solutions.mp4", , 10. August 2011 (2011-08-10), XP054976381, Gefunden im Internet: URL:https://www.youtube.com/watch?v=MobGmJ -Wx0M [gefunden am 2016-02-17]
- Phaust Jethro: "Pharmax - RG2 Ultra - Système robot + automate pour pharmacie", , 19. Mai 2014 (2014-05-19), XP054976378, Gefunden im Internet: URL:https://www.youtube.com/watch?v=6kdrD6 wg_7I [gefunden am 2016-02-17]

## Beschreibung

Die vorliegende Erfindung betrifft eine Kommissioniervorrichtung für Stückgüter, insbesondere Arzneimittelpackungen, mit einer Mehrzahl von Lagerschächten sowie ein Verfahren zum Betreiben einer solchen Kommissioniervorrichtung.

Automatisierte oder zumindest teilautomatisierte Kommissionierungsvorrichtungen werden häufig in Apotheken eingesetzt, um Arzneimittelpackungen platzsparend lagern zu können. Die Arzneimittelpackungen werden in den bekannten, für Apotheken geeigneten Kommissioniervorrichtungen chaotisch oder sortenrein gelagert. Bei der chaotischen Lagerung werden die Arzneimittelpackungen in der Vorrichtung nicht an stets den gleichen Lagerplätzen gelagert, sondern an den Lagerplätzen, bei denen gerade ausreichend Platz vorhanden ist. Überflüssiges Leervolumen kann so vermieden werden, die Anzahl an gelagerten Arzneimittelpackungen pro m² Grundfläche kann erheblich erhöht werden.

Arzneimittelpackungen, die eine sehr hohe Abgabefrequenz haben (sogenannte Schnelldreher), werden häufig sortenrein in Lagerschächten gelagert. Jeder Lagerschacht umfasst an seinem unteren Ende eine von einer Steuereinrichtung ansteuerbare Sperreinrichtung, mit der eine oder mehrere Arzneimittelpackungen aus dem Lagerschacht ausgelagert werden können. Die Anzahl unterschiedlicher Arzneimittel, die mit einer Kommissioniervorrichtung mit sortenreinen Lagerschächten gelagert werden können, entspricht im Höchstfall der Anzahl der sortenreinen Lagerschächte.

Die genaue Konstruktion einer Kommissioniervorrichtung hängt von den jeweiligen Anforderungen vor Ort ab, d. h. es gibt Kommissioniervorrichtungen mit ausschließlich chaotischer Lagerung, Kommissioniervorrichtungen mit ausschließlich sortenreiner Lagerung in Lagerschächten sowie Kommissioniervorrichtungen, bei denen beide Lagerarten vereint sind.

Unabhängig von der Art der Lagerung der Arzneimittelpackungen ist die Verschmutzung der Kommissioniervorrichtung durch Arzneimittelreste, Verpackungsmaterialreste oder Staub ein großes Problem, da die Reinigung der Lagerplätze für die chaotische Lagerung und/oder die sortenreine Lagerung ausgesprochen zeitaufwendig ist. Sollen z. B. Lagerschächte für eine sortenreine Lagerung von Arzneimittelpackungen gereinigt werden, ist es üblich, einen ganzen Regalboden, auf welchem eine Mehrzahl von Lagerschächten zusammengefasst sind, aus der Kommissioniervorrichtung auszubauen und durch einen gereinigten Regalboden zu ersetzen oder im eingebauten Zustand in der Kommissioniervorrichtung zu reinigen. Bei beiden Methoden bzw. Verfahren ist es zwingend erforderlich, dass sämtliche Arzneimittelpackungen vor dem Reinigen aus den Lagerschächten entfernt werden. Unabhängig davon, nach welchem der bekannten Verfahren die Lagerschächte gereinigt werden, ist die Ausfallzeit der Lagerschächte oder ggf. der gesamten Kommissioniervorrichtung, erheblich.

Aus der EP 1 669 308 A1 ist ein Verfahren und eine Vorrichtung zum Bestücken und Entnehmen von Stückgütern aus geneigten Regalfächern eines Lagerregals bekannt. Die Regalfächer sind zweiteilig ausgebildet, und zwar derart, dass mit einem Regalbediengerät Stückgüter aus einem Regalfach entnommen und in ein Regalfach eingelagert werden können. Dazu wird das Ein- und Auslagerende des Regalfaches temporär hochgeschwenkt. Die EP 1 669 308 A1 offenbart eine Kommissioniervorrichtung nach dem Oberbegriff des Anspruchs 1 sowie ein Verfahren nach dem Oberbegriff des Anspruchs 7.

Es ist Aufgabe der vorliegenden Erfindung, eine Kommissioniervorrichtung bereitzustellen, bei welcher die Stillstandzeiten bedingt durch eine Reinigung der Kommissioniervorrichtung vermindert sind. Es ist ferner Aufgabe der vorliegenden Erfindung, ein Verfahren zum Betreiben einer Kommissioniervorrichtung bereitzustellen, welches die vorgenannten Stillstandzeiten ebenfalls vermindert.

Die Aufgabe wird zum einen gelöst durch eine Kommissioniervorrichtung gemäß Anspruch 1. Die erfindungsgemäße Kommissioniervorrichtung umfasst zumindest eine Regalreihe mit mindestens einem Regal mit einer Mehrzahl von übereinander angeordneten, sich jeweils in einer Ebene erstreckenden geneigten Regalböden mit einer Mehrzahl von Lagerschächten. Die Kommissioniervorrichtung kann eine weitere Regalreihe mit mindestens einem Regal mit einer Mehrzahl von übereinander angeordneten, sich jeweils in einer Ebene erstreckenden Regalböden umfassen, wobei diese Regalböden Lagerschächte oder Fachböden zur chaotischen Lagerung umfassen können.

Die Kommissioniervorrichtung umfasst ferner zumindest eine Auslagerungseinrichtung, über welche Stückgüter aus der Kommissioniervorrichtung ausgelagert werden können. Bei der Auslagerungseinrichtung kann es sich beispielsweise um einen Bandförderer handeln.

Zumindest einer der Regalböden umfasst eine Rahmenstruktur, eine Mehrzahl von Schachttrennwänden, eine Mehrzahl von Schachtböden und eine Mehrzahl von mit einer Steuereinrichtung gekoppelten Sperreinrichtungen, wobei jeweils zwei Schachttrennwände und ein Schachtboden einen langgestreckten Lagerschacht mit einem Einlagerungsende und einem Auslagerungsende definieren, wobei bei den Auslagerungsenden jeweils eine der Sperreinrichtungen angeordnet ist. Jeder Regalboden umfasst regelmäßig eine Mehrzahl von langgestreckten Lagerschächten, die über das Einlagerungsende von einem Bediengerät oder per Hand mit Stückgütern bestückt werden, und bei deren Auslagerungsende über die Sperreinrichtungen Stückgüter abgegeben werden.

Jedem Schachtboden ist eine Stützeinrichtung zugeordnet, auf welcher der Schachtboden aufliegt. Die Stützeinrichtung ist derart ausgebildet, dass ein weiterer Schachtboden zwischen den aufliegenden Schachtboden und die Stützeinrichtung geschoben werden kann. Die Schachtböden sind also nicht fest mit der Stützeinrichtung verbunden, sondern liegen lediglich derart auf dieser auf, dass ein weiterer Schachtboden unter den aufliegenden Schachtboden geschoben werden kann

Jedem Schachtboden ist ein Haltemittel zugeordnet, welches ein Verrutschen des Schachtbodens in Längsrichtung des Lagerschachtes beim Aufliegen des Schachtbodens auf der Stützeinrichtung verhindert. Das Haltemittel kann an dem Schachtboden selber oder einem anderen Bauteil ausgebildet sein, wesentlich ist, dass das Verrutschen des Schachtbodens in Längsrichtung eines Lagerschachts vermieden wird.

Die langgestreckten Lagerschächte sind durch jeweils zwei Schachttrennwände und einen Schachtboden definiert, wobei jedem Schachtboden eine Stützeinrichtung zugeordnet ist. Erfindungsgemäß ist es vorgesehen, dass die Schachttrennwände T-förmig ausgebildet sind, wobei die beiden Schenkel Stützabschnitte darstellen, wobei jeweils zwei Stützabschnitte von zwei benachbarten Schachttrennwänden eine Stützeinrichtung eines Schachtbodens bilden, auf welcher ein Schachtboden aufliegt. Eine entsprechende Ausgestaltung ist konstruktiv besonders einfach. Ferner sind die Schachtböden entlang einer orthogonal zu der Ebene der fixierten Schachtböden verlaufenden Vertikalachse (z) der Lagerschächte bewegbar gelagert. Ein aufliegendes Ende wird zum Einschieben eines neuen Schachtbodens angehoben, also entlang der Vertikalachse bewegt, und ein neuer Schachtboden wird untergeschoben. Erfindungsgemäß ist es ferner vorgesehen, dass bei dem Einlagerungsende ein Halteblech angeordnet ist, wobei ein Abschnitt dieses Halteblechs, der parallel zu der Ebene der Schachtböden ausgebildet ist, diese geringfügig überlappt und eine Mehrzahl von zu den Schachtböden auskragenden Halterungen umfasst, wobei die Haltemittel als Öffnungen ausgebildet sind, die mit den Halterungen zur Verhinderung des Verrutschens des Schachtbodens in Längsrichtung der Lagerschächte zusammenwirken.

Erfindungsgemäß ist es demnach möglich, die Schachtböden, die naturgemäß durch die aufliegenden Stückgüter am stärksten verschmutzt werden, einfach und rasch durch saubere Schachtböden auszutauschen. Dazu ist weder eine Demontage eines Regalbodens mit einer Mehrzahl von Lagerschächten notwendig, noch ist es notwendig, bei den sehr beengten Platzverhältnissen im Inneren der Kommissioniervorrichtung die gesamten Lagerschächte zu reinigen. Der einfache Austausch der verunreinigten Schachtböden durch saubere Schachtböden hat im Hinblick auf das Reinigen der Schachtböden "vor Ort" ferner den Vorteil, dass die auf den Schachtböden aufliegenden Verunreinigungen beim Reinigen nicht aufgewirbelt werden und sich in anderen Teilen der Kommissioniervorrichtung ablagern.

Verunreinigte Schachtböden sind also schnell und einfach durch gereinigte Schachtböden zu ersetzen, wodurch die reinigungsbedingten Stillstandzeiten der erfindungsgemäßen Kommissioniervorrichtung erheblich vermindert sind. Durch das Unterschieben des neuen Regalbodens ist es auch nicht erforderlich, dass sämtliche in einem Lagerschacht vorhandenen Arzneimittelpackungen aus diesem Lagerschacht entfernt werden bevor dieser gereinigt wird. Die Arzneimittelpackungen können in dem Lagerschacht verbleiben und dieser kann trotzdem gereinigt werden, indem ein alter durch einen neuen Schachtboden ersetzt wird. Dies ist ein weiterer großer Vorteil, den die erfindungsgemäße Kommissioniervorrichtung bietet - bei bekannten Vorrichtungen mussten die zu reinigenden Lagerschächte stets leer geräumt sein, dies ist erfindungsgemäß nicht mehr notwendig.

Die Befüllung der Lagerschächte kann manuell durch einen Benutzer erfolgen. Aufgrund der sortenreinen Lagerung der Stückgüter ist eine Befüllung durch einen Benutzer relativ einfach durchzuführen. Insbesondere bei Kommissioniervorrichtungen mit gemischter Lagerung, also mit Lagerschächten für die sortenreine Lagerung und Fachböden für die chaotische Lagerung, ist es jedoch bevorzugt, dass die Kommissioniervorrichtung ein vor der Regalreihe horizontal und vertikal verfahrbares und mit der Steuereinrichtung gekoppeltes Bediengerät sowie zumindest eine Einlagerungseinrichtung, mit welcher Stückgüter in die Kommissioniervorrichtung bewegt werden und von welcher das Bediengerät Stückgüter entnehmen kann, umfasst. Mit Hilfe des Bediengeräts können die Lagerschächte und die Fachböden befüllt werden. Alternativ kann die Befüllung der Lagerschächte manuell erfolgen, die chaotische Lagerung auf den Fachböden aber mit dem Bediengerät durchgeführt werden. Bei einer entsprechenden Ausführungsform können sortenrein und chaotisch zu lagernde Stückgüter mit Hilfe des Bediengeräts rasch und zuverlässig eingelagert werden.

Damit das Verrutschen eines Schachtbodens in Längsrichtung des Lagerschachtes beim Aufliegen des Schachtbodens auf der Stützeinrichtung verhindert ist, ist jedem Schachtboden ein Haltemittel zugeordnet. Wie genau dieses ausgebildet ist und wo, beispielsweise bei einem Schachtboden, ein solches Haltemittel angeordnet ist, hängt im Detail von der genauen Konstruktion der Lagerschächte ab. Ferner ist es im Hinblick auf die Ausführung und Anordnung des Haltemittels von Bedeutung, ob der neue Schachtboden von dem Einlagerungsende oder dem Auslagerungsende des Lagerschachtes untergeschoben wird. Wie bereits angedeutet, ist im Inneren der Kommissioniervorrichtung ein Bediengerät horizontal und vertikal verfahrbar, so dass der Raum im Inneren der Kommissioniervorrichtung (also bei dem Einlagerungsende der Lagerschächte) recht beengt ist, und ein Arbeiten mit Schachtböden im Inneren der Kommissioniervorrichtung nicht vorteilhaft ist. Bei einer bevorzugten Ausführungsform der erfindungsgemäßen Kommissioniervorrichtung ist es daher vorgesehen, dass das Haltemittel bei dem dem Einlagerungsende eines Lagerschachtes entsprechenden Abschnitt ausgebildet ist. Bei dem Auslagerungsende des Schachtbodens ist dann keine Fixierung des Schachtbodens über ein Haltemittel notwendig, so dass ein Unterschieben eines neuen Schachtbodens über das Auslagerungsende möglich ist. Die Auslagerungsenden der Lagerschächte sind regelmäßig sehr einfach zu erreichen, indem eine zumeist lediglich eingehängte Seitenwand der Kommissioniervorrichtung entfernt wird.

In Abhängigkeit von der Länge der Schachtböden kann das Arbeiten mit diesen, insbesondere kurz vor dem Unterschieben unter einen alten Schachtboden, schwierig sein. Um auch bei räumlich beengten Verhältnissen ein Unterschieben eines neuen Schachtbodens zu ermöglichen oder das Einschieben zu vereinfachen, ist es bei einer bevorzugten Ausführungsform vorgesehen, dass die Schachtböden zumindest einen Gelenkabschnitt aufweisen.

Auch wenn der Austausch von verschmutzten Schachtböden bei der erfindungsgemäßen Kommissioniervorrichtung deutlich verminderte Stillstandzeiten der Kommissioniervorrichtung bedingt, ist es bevorzugt, dass eine Reinigung lediglich dann stattfindet, wenn dies notwendig ist. Bei einer bevorzugten Ausführungsform ist es daher vorgesehen, dass die Schachtböden einen mit der Steuereinrichtung gekoppelten Sensor umfassen, der einen Verschmutzungsgrad eines Schachtbodens ermitteln und an die Steuereinrichtung weiterleiten kann. Bei Kenntnis des Verschmutzungsgrades eines Schachtbodens ist es möglich, einen Austausch lediglich dann zu initiieren, wenn das, bedingt durch den Verschmutzungsgrad, notwendig ist.

Alternativ können die Schachtböden eine kombinierte Erfassungs- und Anzeigeeinrichtung umfassen, die einen Verschmutzungsgrad eines Schachtbodens ermitteln und anzeigen kann.

Einem Lagerschacht kann ferner ein Sensor zum Überwachen des Füllgrades zugeordnet sein. Mit diesem können auch hängengebliebene oder nicht rutschende Packungen (beispielsweise aufgrund eines Materialfehlers an der Packung) detektiert werden.

Einer Sperreinrichtung kann ein weiterer Sensor zugeordnet sein, mit welchem erfasst wird, ob beim Auslösen der Sperreinrichtung das angeforderte Stückgut auch tatsächlich abgegeben wird.

Die Aufgabe wird ferner gelöst durch ein Verfahren zum Betreiben einer Kommissioniervorrichtung gemäß Anspruch 7. Die Kommissioniervorrichtung umfasst dabei eine Regalreihe mit mindestens einem Regal mit einer Mehrzahl von übereinander angeordneten, sich jeweils in einer Ebene erstreckenden Regalböden mit einer Mehrzahl von Lagerschächten, wobei zumindest ein Regalboden eine Rahmenstruktur, eine Mehrzahl von Schachttrennwänden, eine Mehrzahl von Schachtböden, und eine Mehrzahl von Sperreinrichtungen umfasst, wobei jeweils zwei Schachttrennwände und ein Schachtboden einen langgestreckten Lagerschacht mit einem Einlagerungsende und einem Auslagerungsende definieren. Den Auslagerungsenden ist jeweils eine Sperreinrichtung und jedem Schachtboden eine Stützeinrichtung zugeordnet, auf welcher der Schachtboden aufliegt, und welche derart ausgebildet ist, dass ein weiterer Schachtboden unter den aufliegenden Schachtboden geschoben werden kann, wobei jedem Schachtboden ein Haltemittel zugeordnet ist, welches ein Verrutschen des Schachtbodens in Längsrichtung X des Lagerschachtes beim Aufliegen des Schachtbodens auf der Stützeinrichtung verhindert.

Bei dem erfindungsgemäßen Verfahren wird ein auf einer Stützeinrichtung aufliegender alter bzw. verunreinigter Schachtboden bei dem Auslagerungs- oder Einlagerungsende des entsprechenden Lagerschachtes angehoben, und ein gereinigter bzw. sauberer Schachtboden auf der Stützeinrichtung unter den alten Schachtboden geschoben. Schließlich wird der alte Schachtboden entfernt und der neue Schachtboden gegen ein Verrutschen fixiert.

Bei dem erfindungsgemäßen Verfahren ist es also nicht länger notwendig, einen ganzen Regalboden mit einer Mehrzahl von Lagerschächten aus der Kommissioniervorrichtung zum Reinigen der Lagerschächte auszubauen, oder die Lagerschächte in der Maschine selber zu reinigen, was regelmäßig dazu führt, dass ein erheblicher Anteil der Verunreinigungen aufgewirbelt wird und sich bei anderem Ort innerhalb der Kommissioniervorrichtung absetzt. Indem nur die am stärksten verunreinigten Teile, nämlich die Schachtböden, entfernt werden, und dies erfindungsgemäß rasch und ohne aufwendige Maßnahmen, kann die reinigungsbedingte Stillstandzeit der Kommissioniervorrichtung stark vermindert werden. Die neuen Schachtböden können bei dem Einlagerungsende eines Lagerschachtes aufliegend auf der Stützeinrichtung unter den aufliegenden Schachtboden geschoben werden. Dazu wird der Schachtboden bei dem Auslagerungsende leicht angehoben und der neue Schachtboden eingeschoben. Eine entsprechende Vorgehensweise ist dann angezeigt, wenn auf die Auslagerungsenden der Schachtböden leicht zugegriffen werden kann, beispielsweise wenn eine Außenwand der Kommissioniervorrichtung leicht zugänglich und demontierbar ist.

Alternativ können die neuen Schachtböden bei den Einlagerungsenden der Lagerschächte eingeführt werden. Bei einer bevorzugten Ausführungsform des erfindungsgemäßen Verfahrens sind die Schachtböden bei dem Einlagerungsende zumindest abschnittsweise keilförmig ausgebildet und ein auf einer Stützeinrichtung aufliegender alter Schachtboden wird bei dem Einlagerungsende des entsprechenden Lagerschachtes durch Einschieben eines neuen Schachtbodens angehoben, wobei der neue Schachtboden bei dem Auslagerungsende vorzugsweise komplementär zu dem Einlagerungsende des alten Schachtbodens ausgebildet ist.

Der neue und der alte Schachtboden sind erfindungsgemäß abschnittsweise so ausgebildet, dass das spätere Auslagerungsende des neuen Schachtbodens das Einlagerungsende des aufliegenden Schachtbodens automatisch bei Einschieben anhebt und so den Vorgang des Unterschiebens des neuen Schachtbodens vereinfacht.

Im Nachfolgenden wird die erfindungsgemäße Kommissioniervorrichtung sowie das erfindungsgemäße Verfahren unter Bezugnahme auf bevorzugte Ausführungsformen näher beschrieben, wobei
Figur 1 eine perspektivische Ansicht einer ersten Ausführungsform der erfindungsgemäßen Kommissioniervorrichtung zeigt;
Figur 2 eine Schnittansicht der in Figur 1 gezeigten Ausführungsform zeigt;
Figur 3 eine weitere perspektivische Ansicht der Ausführungsform zeigt;
Figur 4 eine Hinteransicht der ersten Ausführungsform zeigt;
Figuren 5a und 5b einen Regalboden der ersten Ausführungsform zeigen;
Figuren 6a und 6b Detailansichten eines Regalbodens der ersten Ausführungsform zeigen;
Figuren 7a und 7b weitere Detailansichten mit fortgelassenem Schachtboden zeigen;
Figur 8 eine weitere Ansicht eines Regalbodens mit fortgelassenen Schachtböden zeigt;
Figur 9 eine Detailansicht des Auslagerungsendes eines Regalbodens zeigt;
Figuren 10a und 10b weitere Detailansichten des Auslagerungsendes mit fortgelassenem Schachtboden zeigen; und
Figuren 11a bis 11f schematisch den Ablauf einer bevorzugten Ausführungsform des erfindungsgemäßen Verfahrens zeigen.

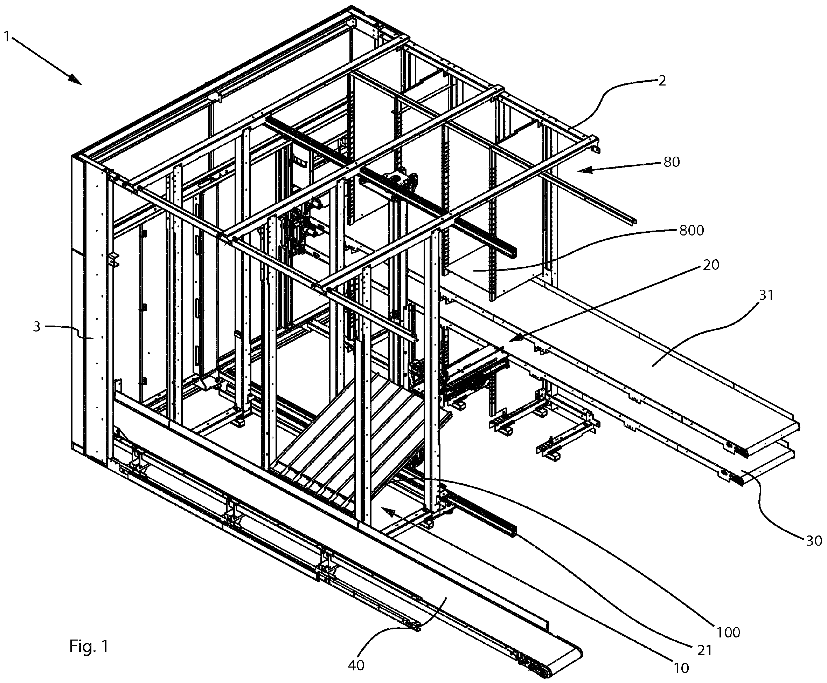

Figur 1 zeigt eine perspektivische Ansicht einer erfindungsgemäßen Kommissioniervorrichtung 1, wobei ein Teil der für die Erfindung unwesentlichen Elemente der Kommissioniervorrichtung, wie beispielsweise ein Großteil der Gerüststruktur 2 sowie ein Großteil der Außenverkleidung 3, fortgelassen ist. Die Kommissioniervorrichtung 1 umfasst eine erste Regalreihe 10 mit mehreren Regalen, die jeweils eine Mehrzahl von übereinander angeordneten, nach außen abfallenden Regalböden 100 aufweisen (wobei in Figur 1 lediglich ein Regalboden 100 angedeutet ist; weitere Regalböden können über und neben dem dargestellten Regalboden angeordnet sein). Die einzelnen Regale der ersten Regalreihe 10 sind durch (nicht dargestellte) Regalwände und eine Mehrzahl der vorgenannten Regalböden 100 gebildet. Die schrägen Regalböden 100 umfassen eine Mehrzahl von Lagerschächten, die unter Bezugnahme auf nachfolgende Figuren genauer beschrieben werden. In diesen Lagerschächten sind üblicherweise Arzneimittelpackungen sortenrein gelagert, d. h. pro Lagerschacht ist lediglich eine Art von Arzneimittelpackung gelagert.

Gegenüber der ersten Regalreihe 10 ist eine zweite Regalreihe 80 angeordnet, die eine Mehrzahl von Regalen mit sich in einer horizontalen Ebene erstreckenden Regalböden 800 aufweist, wobei bei der gezeigten Ausführungsform auch bei der zweiten Regalreihe 80 lediglich ein Regalboden 800 dargestellt ist. Anders als bei der ersten Regalreihe 10 sind die Regalböden 800 der zweiten Regalreihe 80 als einfache Ablagefächer ohne Lagerschächte ausgebildet, d. h. auf den Regalböden 800 können Arzneimittelpackungen chaotisch gelagert werden.

Bei der in Figur 1 gezeigten Ausführungsform sind in die zweite Regalreihe 80 zwei Einlagerungseinrichtungen 30, 31 integriert, die bei der gezeigten Ausführungsform als Förderbänder ausgebildet sind. Die Einlagerungseinrichtungen sind üblicherweise so angeordnet und dimensioniert, dass sie mit Einlagerungskanten der Regalböden 800 abschließen. Eine entsprechende Anordnung der Einlagerungseinrichtungen und der Regalböden macht das Entnehmen von Arzneimittelpackungen von den Einlagerungseinrichtungen und das Ablegen auf den Regalböden besonders einfach.

Unterhalb der und vor den geneigten Regalböden 100 ist eine Auslagerungseinrichtung 40 angeordnet, auf welche die in den geneigten Lagerschächten angeordneten Arzneimittelpackungen bei der Auslösung der Sperreinrichtungen der geneigten Lagerschächte fallen und über welche die angeforderten Arzneimittelpackungen aus der Kommissioniervorrichtung bewegt werden. Bei der in Figur 1 gezeigten Ausführungsform ist auch die Auslagerungseinrichtung 40 als Förderband ausgebildet.

Zwischen der ersten und der zweiten Regalreihe 10, 80 ist eine Gasse ausgebildet, deren Breite durch den Abstand der Einlagerungskanten der jeweiligen Regalböden 100, 800 definiert ist, wobei die Einlagerungskanten der verschiedenen Regalböden der ersten und zweiten Regalreihe vorzugsweise in einer vertikalen Ebene angeordnet sind. In der Gasse kann das Bediengerät 20 an einer entsprechenden Führung horizontal und vertikal verfahren werden, wobei in Figur 1 insbesondere die Horizontalführung 21 des Bediengerätes 20 zu erkennen ist.

Die gezeigte Ausführungsform kombiniert sortenreine und chaotische Lagerung und umfasst daher ein Bediengerät sowie zwei Einlagerungseinrichtungen in Form von Bandförderern. Bei alternativen Ausführungsformen mit ausschließlich Lagerschächten kann das Bediengerät und/oder die Einlagerungseinrichtungen fortgelassen werden.

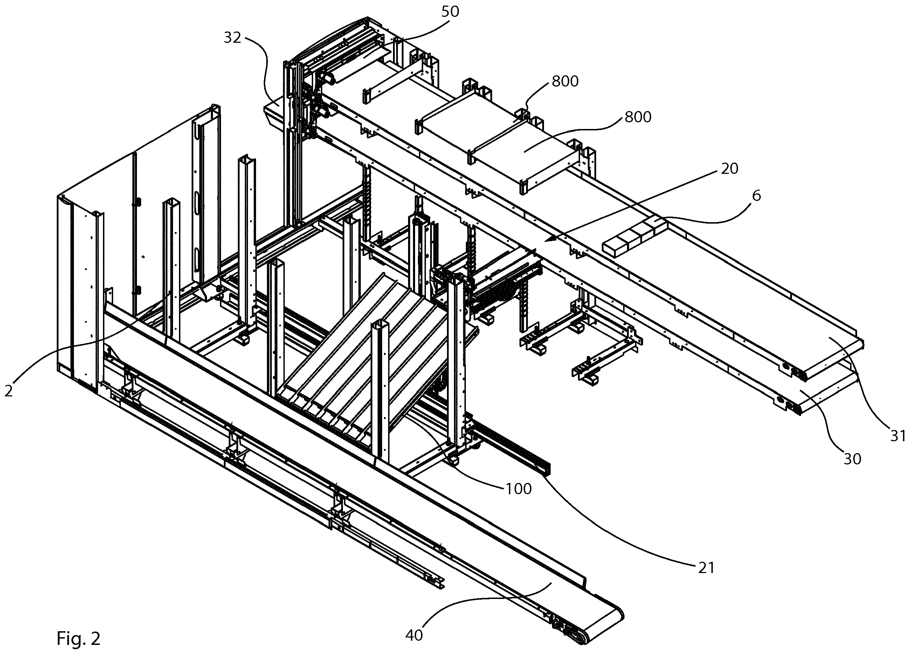

Figur 2 zeigt eine Schnittansicht der in Figur 1 gezeigten Ausführungsform, bei welcher die obere Hälfte der Kommissioniervorrichtung fortgelassen ist. Man erkennt bei dieser Schnittansicht insbesondere die Anordnung der geneigten Regalböden 100 sowie der horizontalen Regalböden 800. Ferner ist zu erkennen, dass die Stirnseiten der horizontalen Regalböden 800 und die Seiten der Auslagerungseinrichtungen 30, 31 alle in einer Ebene liegen. Bei dieser Ansicht ist ferner zu erkennen, dass jeder Auslagerungseinrichtung 30, 31, eine Identifikationseinrichtung 50 zugeordnet ist, mit welcher Daten von auf einer Einlagerungseinrichtung aufliegenden Arzneimittelpackungen ermittelt werden können. Ferner ist zu erkennen, dass die Einlagerungseinrichtungen einen äußeren Abschnitt 32 aufweisen, der über die Vorderfront der Kommissioniervorrichtung herausragt und auf welchem die einzulagernden Arzneimittelpackungen für die Einlagerung abgelegt werden können. Beispielhaft sind bei dieser Figur einige Arzneimittelpackungen 6 auf der oberen Einlagerungseinrichtung 30 dargestellt.

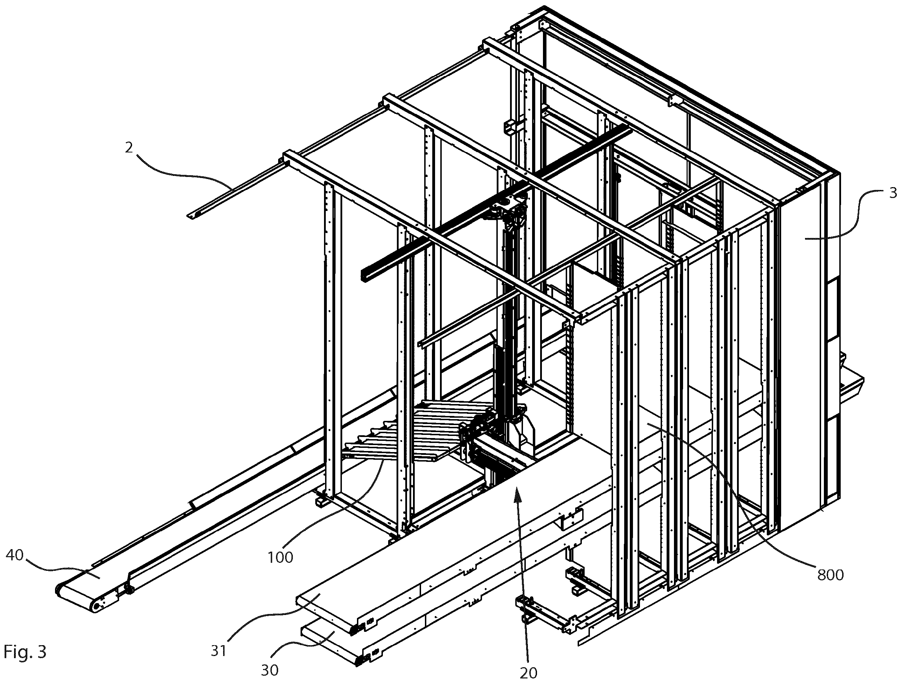

Figur 3 zeigt eine alternative perspektivische Ansicht der bereits in Figur 1 gezeigten Ausführungsform, wobei diese Ansicht die Kommissioniervorrichtung von einer anderen Seite zeigt.

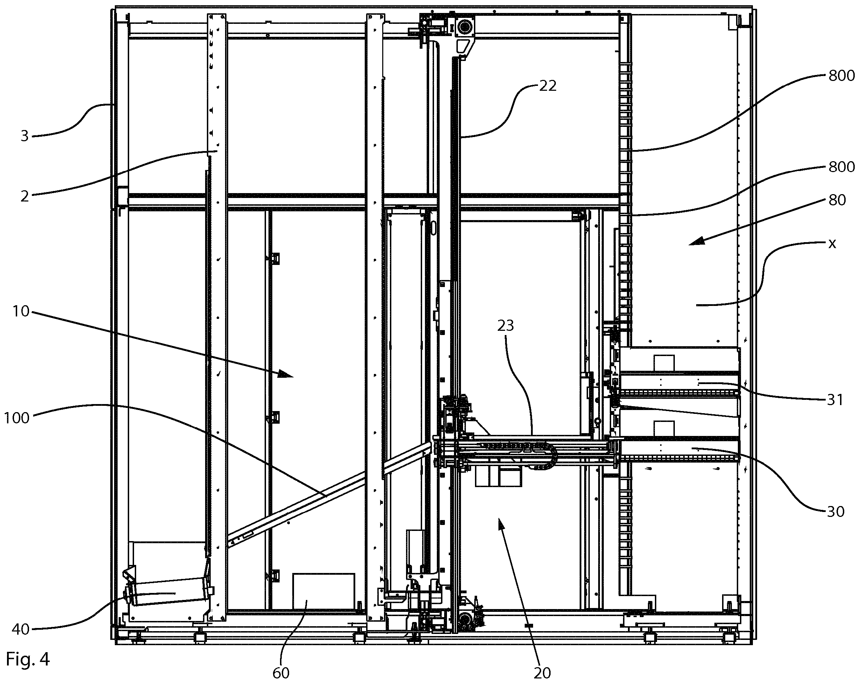

Figur 4 zeigt eine Hinteransicht der ersten Ausführungsform der erfindungsgemäßen Kommissioniervorrichtung, wobei aufgrund der fortgelassenen Außenverkleidung ein Teil des Inneren der Kommissioniervorrichtung zu erkennen ist. Es sind die beiden gegenüber angeordneten Regalreihen 10, 80 zu erkennen, wobei bei den Regalreihen aus Gründen der Übersichtlichkeit lediglich ein bzw. zwei Regalböden dargestellt sind. Zwischen der ersten und der zweiten Regalreihe ist die Gasse gebildet, in welcher das Bediengerät 20 horizontal und vertikal verfahrbar ist, wobei bei Figur 4 insbesondere die vertikale Führung 22 zu erkennen ist. Das Bediengerät 20 umfasst eine Greifvorrichtung 23, die die Gasse vollständig überspannt und so den Abstand zwischen der ersten und der zweiten Regalreihe überbrücken kann, ohne dass die Greifvorrichtung dazu verfahren werden muss. Wie bei dieser Darstellung gut zu erkennen ist, sind die geneigten Regalböden 100 von der Gasse weg nach außen hin zu der Auslagerungseinrichtung 40 geneigt. Bei Figur 4 ist ferner die Steuereinrichtung 60 angedeutet, die mit dem Bediengerät 20 gekoppelt ist.

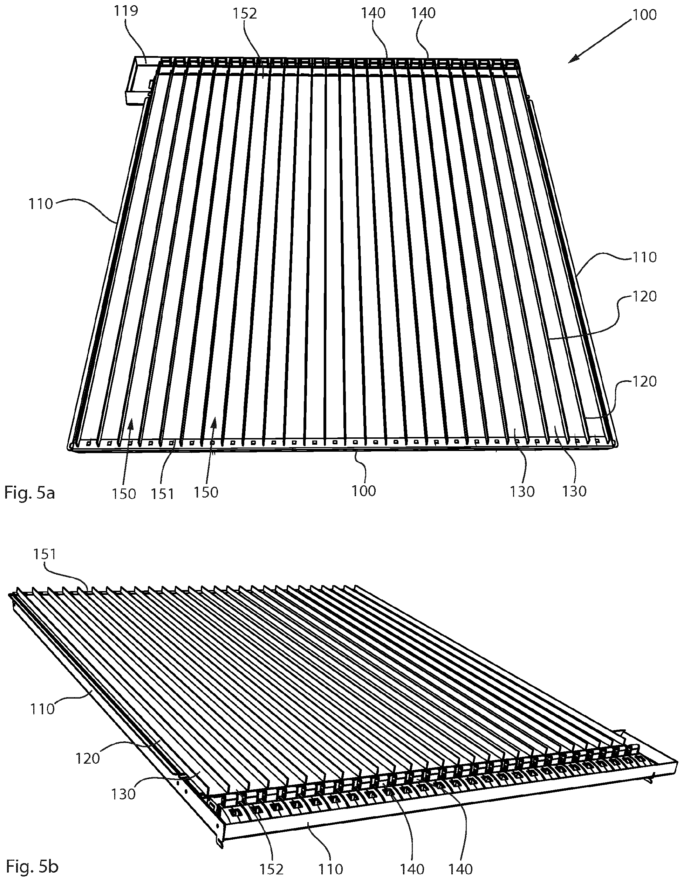

Figuren 5a und 5b zeigen Detailansichten eines Regalbodens 100 mit einer weitgehend quadratischen Rahmenstruktur 110, die in der "linken oberen" Ecke eine Ausbuchtung 119 aufweist. Auf der Rahmenstruktur 110 sind eine Mehrzahl von parallelen Schachttrennwänden 120 angeordnet, und zwischen jeweils zwei Schachttrennwänden 120 ist ein Schachtboden 130 angeordnet. Jeweils zwei Schachttrennwände und ein Schachtboden definieren einen langgestreckten Lagerschacht 150, wobei jeder Lagerschacht 150 ein Einlagerungsende 151 und ein Auslagerungsende 152 aufweist. Bei dem Auslagerungsende 152 eines jeden Lagerschachtes 150 ist eine Sperreinrichtung 140 angeordnet, die mit der (nicht dargestellten) Steuereinrichtung gekoppelt ist. Die Figur 5a zeigt den Regalboden von der Einlagerungsseite her, die Figur 5b von der Auslagerungsseite her. In der erfindungsgemäßen Kommissioniervorrichtung sind die Regalböden üblicherweise geneigt angeordnet, und zwar derart, dass das Auslagerungsende des Regalbodens zu der hier nicht dargestellten Auslagerungseinrichtung geneigt ist. Die Regalböden selber sind mit (nicht dargestellten) Befestigungsmitteln an vertikalen Streben der Regale bzw. Regalreihen befestigt.

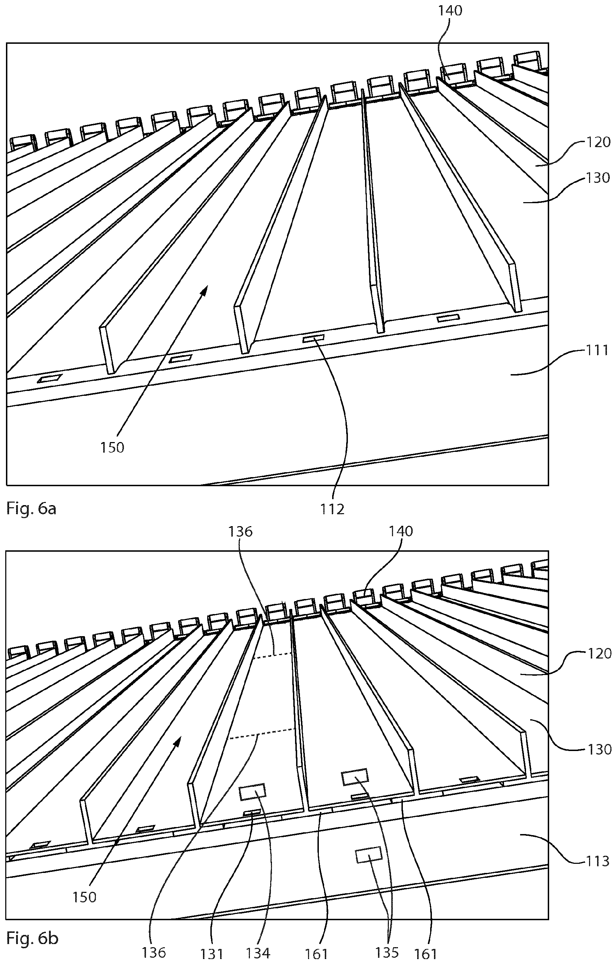

Figuren 6a und 6b zeigen Detailansichten der Einlagerungsstirnseite eines Regalbodens. Bei der Einlagerungsstirnseite ist ein Halteblech 111 angeordnet, wobei ein Abschnitt dieses Haltebleches, der parallel zu der Ebene der Schachtböden ausgebildet ist, diese geringfügig überlappt. Dieser Abschnitt des Haltebleches 111 umfasst eine Mehrzahl von zu den Schachtböden ausgekragten Halterungen 112, wobei jedem Schachtboden eine solche Halterung 112 zugeordnet ist.

Bei Figur 6b ist bei einem Schachtboden ein mit der Steuereinrichtung gekoppelter Sensor 134 angedeutet, welcher den Verschmutzungsgrad des Schachtbodens ermittelt und an die Steuereinrichtung weitergibt. Basierend auf den Informationen einer Mehrzahl solcher Sensoren kann dann entschieden werden, dass einige oder sämtliche Lagerschächte eines Regalbodens gereinigt werden, sprich die alten durch neue Schachtböden ersetzt werden. Alternativ kann eine Erfassung- und Anzeigeeinrichtung 135 verwendet werden, die ebenfalls lediglich bei einem Schachtboden angedeutet ist. Diese kann, muss aber nicht mit der Steuereinrichtung gekoppelt sein. Das Anzeigen eines Reinigungsbedarfs kann an dem Regalboden selber erfolgen.

Bei dem Regalboden mit dem Sensor 134 sind ferner zwei Gelenkbereiche 136 angedeutet, die ein Abknicken orthogonal zur Längsrichtung ermöglichen, um das Arbeiten mit dem Regalboden beim Unterschieben unter einen vorhandenen Regalboden zu vereinfachen.

Bei Figur 6b ist das in Figur 6a noch angedeutete Halteblech 111 fortgelassen, und es ist zu erkennen, dass jeder Schachtboden 130 ein als Öffnung ausgebildetes Haltemittel 131 aufweist, wobei ein solches Haltemittel mit einer Halterung 112 des Haltebleches 111 zusammenwirkt und so ein Verrutschen des Schachtbodens in Längsrichtung der Lagerschächte verhindert ist.

In Figur 6b ist ferner zu erkennen, dass die Schachtböden auf Stützabschnitten 161 aufliegen, die als Teile der Schachttrennwände ausgebildet sind, wobei zwei Stützabschnitte 161 eine Stützeinrichtung 160 bilden. Bei der in Figur 6b gezeigten Ausführungsform sind die Schachttrennwände also erfindungsgemäß T-förmig ausgebildet, wobei die beiden Schenkel die Stützabschnitte darstellen. Wie zu erkennen ist, sind die Schachtböden hinsichtlich der Vertikalachse z (orthogonal zu der Ebene der Schachtböden) lediglich bei dem Einlagerungsende der Regalböden temporär über das Halteblech 111 fixiert. Aber auch bei Vorhandensein des Haltebleches 111 sind die Schachtböden bei dem Auslagerungsende der Schachtböden im Hinblick auf die Vertikalachse bewegbar gelagert, da sie in diesem Bereich lediglich auf der Stützeinrichtung 160, gebildet durch die Stützabschnitte 161, aufliegen.

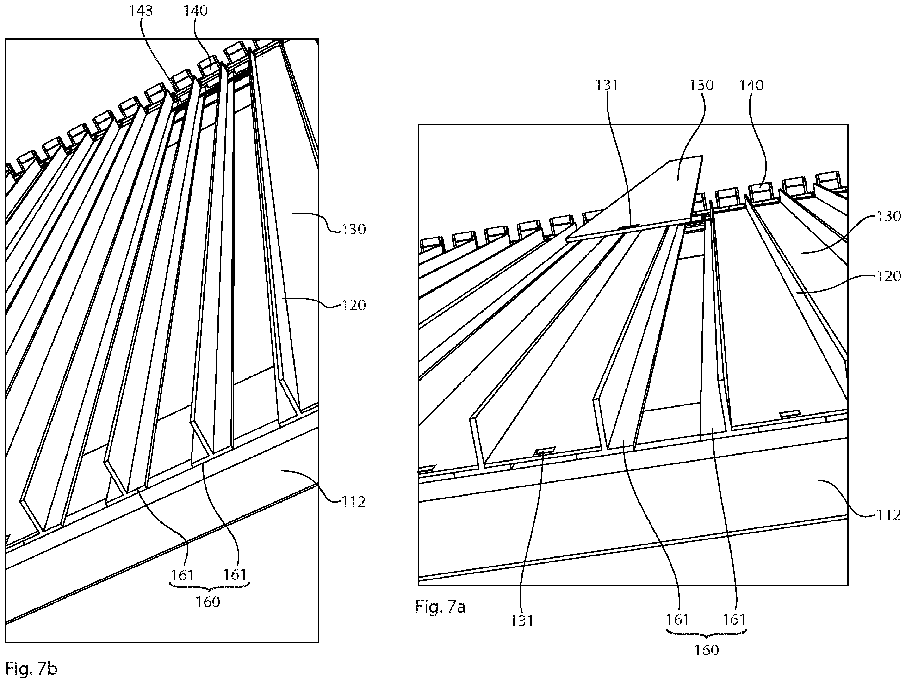

Figur 7a veranschaulicht die Gestaltung der Stützabschnitte 161, die als Abschnitte der Schachttrennwände 120 ausgebildet sind. Bei Figur 7a ist ein Schachtboden 130 mit Haltemittel 131 nach oben wegbewegt, und man kann erkennen, dass sich die Stützeinrichtung über die beinah gesamte Länge des Lagerschachtes erstreckt. Ferner ist zu erkennen, dass das Auslagerungsende eines jeden Lagerschachtes an einer zugeordneten Sperreinrichtung 140 anliegt, so dass, alternativ zu dem dargestellten Haltemittel 131, auch ein Abschnitt der Sperreinrichtung ein Haltemittel 143 bereitstellt, welches ein Verrutschen eines Schachtbodens in Längsrichtung verhindert.

In Figur 7b ist zur Veranschaulichung ein Regalboden mit drei fortgelassenen Schachtböden dargestellt. Auch bei diesem Bild sind die alternativen Haltemittel 143 zu erkennen.

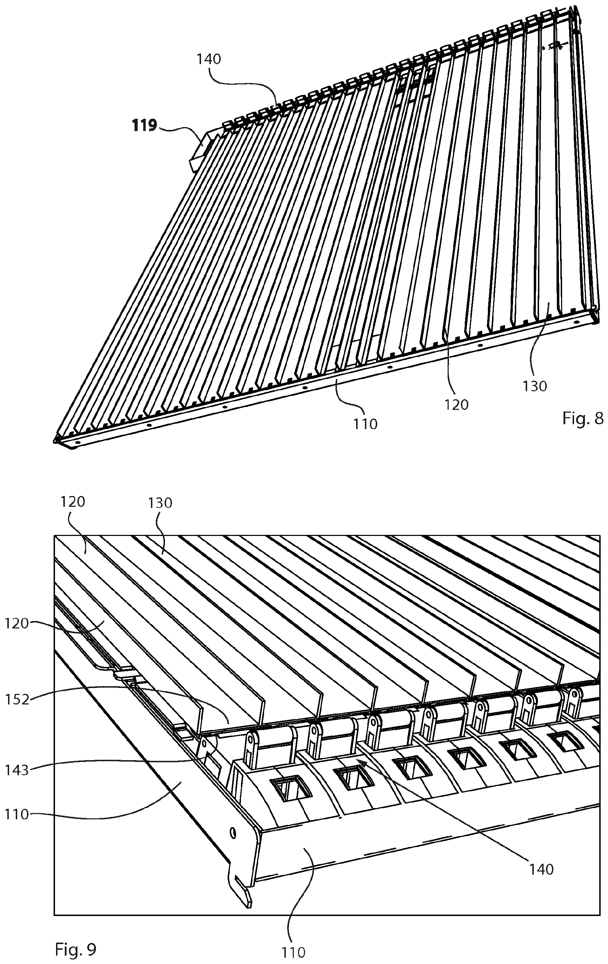

In Figur 8 ist zur Veranschaulichung noch einmal ein vollständiger Regalboden mit drei fortgelassenen Schachtböden dargestellt.

Figur 9 zeigt eine Detailansicht des Auslagerungsendes des Regalbodens, wobei zu erkennen ist, dass die Auslagerungsenden 152 der Schachtböden bzw. Lagerschächte an einem Haltemittel 143 der Sperreinrichtung anliegen. Ferner ist gut zu erkennen, dass jedem einzelnen Lagerschacht 150 eine Sperreinrichtung 140 zugeordnet ist, so dass sämtliche der vorhandenen Lagerschächte 150 eines Regalbodens getrennt voneinander betrieben werden können.

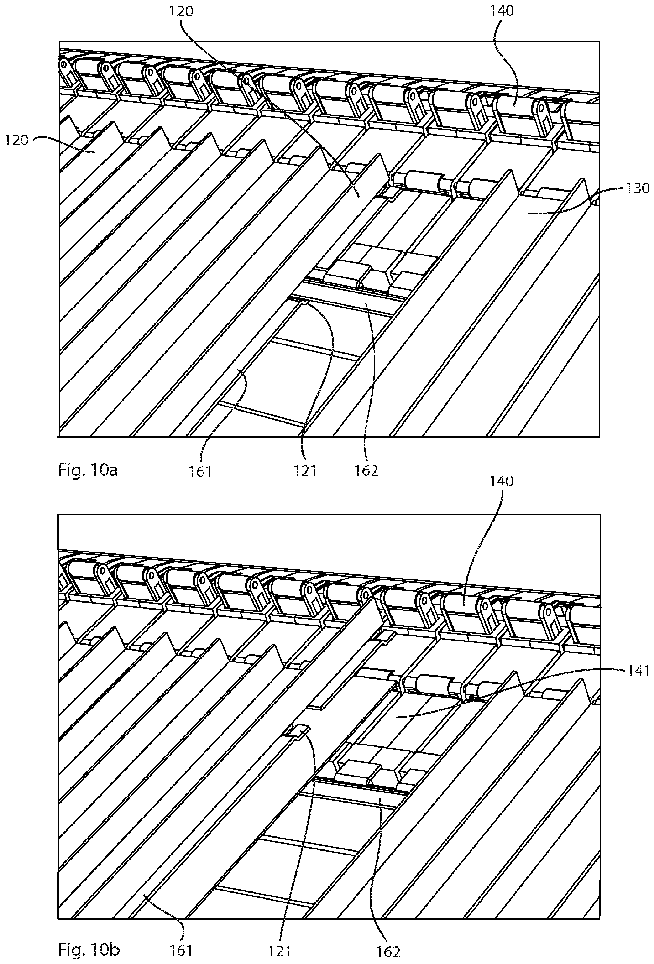

Die Figuren 10a, 10b zeigen Detailansichten des Auslagerungsendes eines Regalbodens, wobei bei den Figuren 10a und 10b zwei nebeneinanderliegende Regalböden sowie die entsprechende Schachttrennwand fortgelassen sind. Bei beiden Figuren ist zu erkennen, dass sich der Stützabschnitt 161 einer Schachttrennwand über beinah die gesamte Länge erstreckt. Ferner ist zu erkennen, dass die Schachttrennwände über einen Klemmabschnitt 121 an einer Stützstrebe 162, die bei der gezeigten Ausführungsform orthogonal zu der Längsrichtung der Lagerschächte verläuft, befestigt sind.

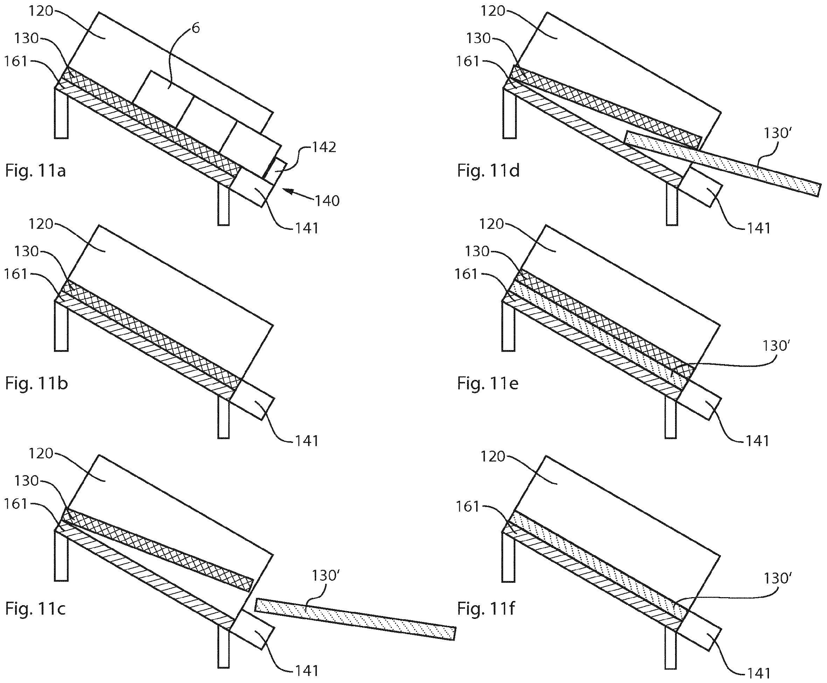

Figuren 11a bis 11f zeigen jeweils Querschnitte durch einen Lagerschacht, und zwar bei verschiedenen Stadien beim Austausch eines Schachtbodens. Figur 11a zeigt eine Schnittansicht eines mit Arzneimittelpackungen 6 befüllten Lagerschachtes, wobei zu erkennen ist, dass ein Schachtboden 130 auf einem Stützabschnitt 161 einer Schachttrennwand 120 aufliegt. Bei dem Auslagerungsende des Lagerschachtes ist eine Sperreinrichtung 140 angeordnet, die einen Grundkörper 141 und ein ein- und ausfahrbares Stoppmittel 142 umfasst. In Figur 11a ist dieses Stoppmittel 142 ausgefahren, so dass die in dem Lagerschacht gelagerten Arzneimittelpackungen 6 in dem Schacht gehalten werden.

In Figur 11b ist der Einfachheit halber ein leerer Lagerschacht gezeigt, wobei das Stoppmittel 142 der Sperreinrichtung 140 in den Grundkörper 141 eingefahren ist. Um nun den alten, verunreinigten Schachtboden 130 entfernen zu können, wird dieser zunächst bei dem Auslagerungsende des Schachtbodens geringfügig angehoben. Dies ist möglich, da es erfindungsgemäß vorgesehen ist, dass der Schachtboden lediglich auf der Stützeinrichtung aufliegt und in Vertikalrichtung des Lagerschachtes weitgehend bewegbar ist.

Bei Figur 11d ist zu erkennen, dass der neue Schachtboden 130' bereits etwa 1/3 seiner Länge unter den alten Schachtboden 130 geschoben ist, wobei der neue Schachtboden 130' beim Einschieben auf dem Stützabschnitt 161 aufliegt.

Bei Figur 11e ist zu erkennen, dass der neue Schachtboden 130' vollständig unter den alten Schachtboden geschoben ist, und beide Schachtböden übereinander angeordnet sind. Im Anschluss daran wird der alte Schachtboden 130 entfernt, und der neue Schachtboden 130' nimmt den Platz des ursprünglichen Schachtbodens 130 ein, wie dies in Figur 11f zu erkennen ist. Nachdem der neue Schachtboden 130' in seiner endgültigen Position ist, wird dieser mit einem (nicht gezeigten) Haltemittel gegen ein Verrutschen in Längsrichtung eines Schachtes gesichert; beispielsweise kann das durch einen Anschlag bei der Sperreinrichtung 140 oder durch ein (nicht gezeigtes) Haltemittel bei dem Einschubende des Lagerschachtes geschehen.

Bei den Figuren 11a - 11f wurde das Einschieben eines neuen Schachtbodens bei leerem Lagerschacht gezeigt. Mit dem erfindungsgemäßen Verfahren ist es aber auch möglich, einen Austausch eines Schachtbodens vorzunehmen, ohne dass sämtliche Arzneimittelpackungen entfernt werden. Wird der neue Schachtboden über das Auslagerungsende eingeführt bzw. untergeschoben, muss dann jedoch sichergestellt werden, dass beim Anheben des alten Schachtbodens keine Arzneimittelpackung herausfällt. Wird der neue Schachtboden über das Einlagerungsende eingeschoben stellt sich dieses Problem nicht, da das Stoppmittel 142 beim Einschieben nicht eingefahren werden muss.

## Patentansprüche

1. Kommissioniervorrichtung für Stückgüter, mit
zumindest einer Regalreihe (10) mit mindestens einem Regal mit einer Mehrzahl von übereinander angeordneten, sich jeweils in einer Ebene erstreckenden geneigten Regalböden (100) mit einer Mehrzahl von Lagerschächten (150), und
zumindest einer Auslagerungseinrichtung (40), über welche Stückgüter ausgelagert werden können,
wobei zumindest ein Regalboden (100) eine Rahmenstruktur (110), eine
Mehrzahl von parallelen Schachttrennwänden (120), eine Mehrzahl von parallelen Schachtböden (130), und eine Mehrzahl von mit einer Steuereinrichtung (60) gekoppelten Sperreinrichtungen (140) umfasst,
wobei jeweils zwei Schachttrennwände (120) und ein Schachtboden (130)
einen langgestreckten Lagerschacht (150) mit einem Einlagerungsende (151) und einem Auslagerungsende (152) definieren, wobei bei den Auslagerungsenden (152) jeweils eine Sperreinrichtung (140) angeordnet ist, und jedem Schachtboden (130) eine Stützeinrichtung (160) zugeordnet ist, auf welcher der Schachtboden (130)
aufliegt, und wobei jedem Schachtboden (130) ein Haltemittel (131) zugeordnet ist, welches ein Verrutschen des Schachtbodens (130) in Längsrichtung (x) des Lagerschachtes (150) beim Aufliegen des Schachtbodens (130) auf der Stützeinrichtung (160) verhindert,
**dadurch gekennzeichnet, dass** die Schachttrennwände (120) T-förmig ausgebildet sind, wobei die beiden Schenkel Stützabschnitte (161) darstellen, wobei jeweils zwei Stützabschnitte (161) von zwei benachbarten Schachttrennwänden eine Stützeinrichtung (160) eines Schachtbodens bilden, wobei die Stützeinrichtungen (160) derart ausgebildet sind, dass die Schachtböden (130) entlang einer orthogonal zu der Ebene der fixierten Schachtböden verlaufenden Vertikalachse der Lagerschächte (150) bewegbar gelagert sind, so dass ein weiterer
Schachtboden (130') zwischen den aufliegenden Schachtboden (130) und die Stützeinrichtung (160) geschoben werden kann,
und **dadurch gekennzeichnet, dass** bei dem Einlagerungsende (151) ein Halteblech (111) angeordnet ist, wobei ein Abschnitt dieses Halteblechs,
der parallel zu der Ebene der fixierten Schachtböden ausgebildet ist, diese geringfügig überlappt und eine Mehrzahl von zu den
Schachtböden auskragenden Halterungen (112) umfasst, wobei jedem Schachtböden eine solche Halterung (112) zugeordnet ist,
wobei die Haltemittel (131) als Öffnungen ausgebildet sind, die mit den Halterungen (112) zur Verhinderung des Verrutschens des Schachtbodens in Längsrichtung der Lagerschächte zusammenwirken.

2. Kommissioniervorrichtung für Stückgüter nach Anspruch 1, **dadurch gekennzeichnet, dass** die Kommissioniervorrichtung
ein vor der Regalreihe (10) horizontal und vertikal verfahrbares und mit der Steuereinrichtung (60) gekoppeltes Bediengerät (20), sowie
zumindest eine Einlagerungseinrichtung (30, 31), mit welcher Stückgüter in die Kommissioniervorrichtung bewegt werden und von welcher das Bediengerät (20) Stückgüter entnehmen kann,
umfasst.

3. Kommissioniervorrichtung für Stückgüter nach einem der Ansprüche 1 oder 2, **dadurch gekennzeichnet, dass** ein Haltemittel (131) bei dem dem Einlagerungsende (151) eines Lagerschachtes (150) entsprechenden Abschnitt eines Schachtbodens (130) ausgebildet ist.

4. Kommissioniervorrichtung für Stückgüter nach einem der Ansprüche 1 - 3, **dadurch gekennzeichnet, dass** die Schachtböden (130) zumindest einen Gelenkabschnitt (136) aufweisen.

5. Kommissioniervorrichtung für Stückgüter nach einem der Ansprüche 1 - 4, **dadurch gekennzeichnet, dass** die Schachtböden (130) einen mit einer Steuereinrichtung (60) gekoppelten Sensor (134) umfassen, der einen Verschmutzungsgrad eines
Schachtbodens ermitteln und an die Steuereinrichtung (60) weiterleiten kann.

6. Kommissioniervorrichtung für Stückgüter nach einem der Ansprüche 1 - 5, **dadurch gekennzeichnet, dass** die Schachtböden (130) eine
kombinierte Erfassungs und Anzeigeeinrichtung (135) umfassen, die einen Verschmutzungsgrad eines Schachtbodens ermitteln und anzeigen kann.

7. Verfahren zum Betreiben einer Kommissioniervorrichtung mit zumindest einer Regalreihe (10) mit mindestens einem Regal mit einer Mehrzahl von übereinander angeordneten, sich jeweils in einer Ebene erstreckenden Regalböden (100) mit einer Mehrzahl von Lagerschächten (150), wobei zumindest ein Regalboden (100) eine Rahmenstruktur (110), eine Mehrzahl von Schachttrennwänden (120), eine Mehrzahl von Schachtböden (130), und eine Mehrzahl von Sperreinrichtungen (140) umfasst, wobei jeweils zwei Schachttrennwände (120) und ein Schachtboden (130) einen langgestreckten Lagerschacht (150) mit einem Einlagerungsende (151) und einem Auslagerungsende (152) definieren, wobei bei den Auslagerungsenden (152) jeweils eine Sperreinrichtung (140) angeordnet ist, und jedem Schachtboden (130) eine Stützeinrichtung (160) zugeordnet ist, auf welcher der Schachtboden (130) aufliegt und welche derart ausgebildet ist, dass ein weiterer Schachtboden (130') unter den aufliegenden Schachtboden (130) geschoben werden kann, und wobei jedem Schachtboden (130) ein Haltemittel (131) zugeordnet ist, welches ein Verrutschen des Schachtbodens (130) in Längsrichtung (x) des Lagerschachtes (150) beim Aufliegen des Schachtbodens (130) auf der Stützeinrichtung (160) verhindert,
**dadurch gekennzeichnet, dass** ein auf einer Stützeinrichtung (160) aufliegender alter Schachtboden (130) bei dem Auslagerungs- oder Einlagerungsende (151, 152) des entsprechenden Lagerschachtes (130) angehoben wird,
ein neuer Schachtboden (130') auf der Stützeinrichtung unter den alten Schachtboden geschoben wird, und
der alte Schachtboden (130) entfernt und der neue Schachtboden (130') gegen ein Verrutschen fixiert wird.

8. Verfahren zum Betreiben einer Kommissioniervorrichtung nach Anspruch 7, wobei die Schachtböden bei dem Einlagerungsende zumindest abschnittsweise keilförmig ausgebildet sind, und wobei
ein auf einer Stützeinrichtung (160) aufliegender alter Schachtboden (130) bei dem Einlagerungsende (151) des entsprechenden Lagerschachtes (150) durch Einschieben eines neuen Schachtbodens (130') angehoben wird,
wobei der neue Schachtboden bei dem Auslagerungsende (152) komplementär zu dem Einlagerungsende (151) des alten Schachtbodens (130) ist.

## Claims

1. A picking device for piece goods, with at least one rack row (10), with at least one rack with a plurality of inclined shelves (100), arranged one above the other, and each extending in one plane, with a plurality of storage bays (150), and at least one retrieval device (40), by way of which piece goods can be retrieved, wherein
at least one shelf (100) comprises a frame structure (110), a plurality of parallel bay partition walls (120), a plurality of parallel bay floors (130), and a plurality of arrester devices (140) coupled to a control device (60), wherein
in each case two bay partition walls (120) and a bay floor (130) define an elongated storage bay (150) with a loading end (151) and a retrieval end (152), wherein an arrester device (140) is arranged at each of the retrieval ends (152), and a support device (160), on which the bay floor (130) rests, is assigned to each bay floor (130), and wherein
a retaining means (131) is assigned to each bay floor (130), which retaining means prevents the bay floor (130) from slipping in the longitudinal direction (x) of the bearing bay (150) when the bay floor (130) is resting on the support device (160),
**characterised in that**,
the bay partition walls (120) are of a T-form design, wherein
the two legs represent support sections (161), wherein each pair of support sections (161) of two adjacent bay partition walls form a support device (160) of a bay floor, wherein
the support devices (160) are designed such that the bay floors (130) are mounted so that they can move along a vertical axis of the storage bays (150) extending orthogonally to the plane of the fixed bay floors, so that a further bay floor (130') can be pushed between the resting bay floor (130) and the support device (160),
and **characterised in that**,
a retaining plate (111) is arranged at the loading end (151), wherein
a section of the said retaining plate, which is designed parallel to the plane of the fixed bay floors, slightly overlaps the latter, and comprises a plurality of retainers (112) projecting from the bay floors, wherein
such a retainer (112) is assigned to each bay floor, wherein
the retaining means (131) are designed as openings, which act together with the retainers (112) to prevent the bay floor from slipping in the longitudinal direction of the bearing bays.

2. The picking device for piece goods in accordance with claim 1,
**characterised in that**,
the picking device comprises an operating device (20) which can be moved horizontally and vertically in front of the rack row (10), and is coupled to the control device (60), and at least one storage device (30, 31), with which piece goods are moved into the picking device, and from which the operating device (20) can remove piece goods.

3. The picking device for piece goods in accordance with one of the claims 1 or 2,
**characterised in that**,
a retaining means (131) is designed at the section of a bay floor (130) corresponding to the loading end (151) of a storage bay (150).

4. The picking device for piece goods in accordance with one of the claims 1 - 3,
**characterised in that**,
the bay floors (130) have at least one hinged section (136).

5. The picking device for piece goods in accordance with one of the claims 1 - 4,
**characterised in that**,
the bay floors (130) comprise a sensor (134) coupled to a control device (60), which can detect a degree of contamination of a bay floor and transmit it to the control device (60).

6. The picking device for piece goods in accordance with one of the claims 1 - 5,
**characterised in that**,
the bay floors (130) comprise a combined detection and display device (135), which can detect and display a degree of contamination of a bay floor.

7. A method for the operation of a picking device with at least one rack row of (10), with at least one rack with a plurality of shelves (100), arranged one above the other, and each extending in one plane, with a plurality of storage bays (150), wherein
at least one shelf (100) comprises a frame structure (110), a plurality of bay partition walls (120), a plurality of bay floors (130), and a plurality of arrester devices (140), wherein
in each case two bay partition walls (120) and a bay floor (130) define an elongated storage bay (150) with a loading end (151) and a retrieval end (152), wherein an arrester device (140) is arranged at each of the retrieval ends (152), and a support device (160) is assigned to each bay floor (130), on which the bay floor (130) rests, and which is designed such that a further bay floor (130') can be pushed under the resting bay floor (130), and wherein
a retaining means (131) is assigned to each bay floor (130), which retaining means prevents the bay floor (130) from slipping in the longitudinal direction (x) of the bearing bay (150) when the bay floor (130) is resting on the support device (160),
**characterised in that**,
an old bay floor (130) resting on a support device (160) is raised at the retrieval or loading end (151, 152) of the corresponding storage bay (130), a new bay floor (130') is pushed on the support device under the old bay floor, and the old bay floor (130) is removed, and the new bay floor (130') is fixed against slippage.

8. The method for operating a picking device in accordance with claim 7, wherein
the bay floors are designed in the form of a wedge at the loading end, at least in some sections, and wherein
an old bay floor (130) resting on a support device (160) is raised at the loading end (151) of the corresponding storage bay (150) by inserting a new bay floor (130'), wherein
the new bay floor at the retrieval end (152) is complementary to the loading end (151) of the old bay floor (130).

## Revendications

1. Dispositif de préparation de commandes destiné à des produits en vrac, pourvu d'au moins une rangée d'étagères (10) avec au moins une étagère dotée d'une pluralité de fonds inférieurs d'étagère (100) inclinés superposés, s'étendant respectivement dans un plan, avec une pluralité de puits de stockage (150) et au moins un système de déstockage (40) par l'intermédiaire duquel des produits en vrac peuvent être déstockés, au moins un fond inférieur d'étagère (100) comprenant une structure en cadre (110), une pluralité de parois séparatrices de puits (120) parallèles, une pluralité de fonds inférieurs de puits (130) parallèles, et une pluralité de systèmes de blocage (140) connectés sur un système de commande (60), chaque fois deux parois séparatrices de puits (120) et un fond inférieur de puits (130) définissant un puits de stockage (150) allongé, pourvu d'une extrémité de stockage (151) et d'une extrémité de déstockage (152), près des extrémités de déstockage (152) étant placé chaque fois un système de blocage (140) et à chaque fond inférieur de puits (130) étant associé un système d'appui (160) sur lequel le fond inférieur de puits (130) repose et à chaque fond inférieur de puits (130) étant associé un moyen de retenue (131), lequel empêche un glissement du fond inférieur de puits (130) dans la direction longitudinale (x) du puits de stockage (150) lorsque le fond inférieur de puits (130) repose sur le système d'appui (160), **caractérisé en ce que** les parois séparatrices de puits (120) sont conçues en forme de T, les deux branches représentant des segments d'appui (161), chaque fois deux segments d'appui (161) de deux parois séparatrices de puits d'un système d'appui (160) formant un fond inférieur de puits, les systèmes d'appui (160) étant conçus de telle sorte que les fonds inférieurs de puits (130) soient logés de manière mobile le long d'un axe vertical du puits de stockage (150) s'écoulant de manière orthogonale par rapport au plan des fonds inférieurs de puits fixés, de sorte qu'un fond inférieur de puits (130') supplémentaire puisse être poussé entre le fond inférieur de puits (130) qui repose et le système d'appui (160) et **caractérisé en ce que** près de l'extrémité de stockage (151) est placée une tôle de maintien (111), un segment de ladite tôle de maintien qui est conçu à la parallèle du plan des fonds inférieurs de puits fixés chevauchant légèrement ces derniers et comprenant une pluralité de fixations (112) débordant vers les fonds inférieurs de puits, à chaque fond inférieur de puits étant associée une telle fixation (112), les moyens de retenue (131) étant conçus sous la forme d'orifices, qui coopèrent avec les fixations (112) pour empêcher le glissement du fond inférieur de puits dans la direction longitudinale des puits de stockage.

2. Dispositif de préparation de commandes pour des produits en vrac selon la revendication 1, **caractérisé en ce que** le dispositif de préparation de commandes comprend un appareil de manutention (20) déplaçable à l'horizontale et à la verticale à l'avant de la rangée d'étagères (10) et connecté avec le système de commande (60), ainsi qu'au moins un système de stockage (30, 31), à l'aide duquel des produits en vrac sont déplacés dans le dispositif de préparation de commandes et à partir de laquelle l'appareil de manutention (20) peut prélever des produits en vrac.

3. Dispositif de préparation de commandes pour des produits en vrac selon l'une quelconque des revendications 1 ou 2, **caractérisé en ce qu'**un moyen de retenue (131) est conçu près du segment d'un fond inférieur de puits (130) correspondant à l'extrémité de stockage (151) d'un puits de stockage (150).

4. Dispositif de préparation de commandes pour des produits en vrac selon l'une quelconque des revendications 1 à 3, **caractérisé en ce que** les fonds inférieurs de puits (130) comportent au moins un segment articulé (136).

5. Dispositif de préparation de commandes pour des produits en vrac selon l'une quelconque des revendications 1 à 4, **caractérisé en ce que** les fonds inférieurs de puits (130) comprennent un capteur (134) connecté avec un système de commande (60) qui est susceptible de déterminer un niveau d'encrassement d'un fond inférieur de puits et de le retransmettre au système de commande (60).

6. Dispositif de préparation de commandes pour des produits en vrac selon l'une quelconque des revendications 1 à 5, **caractérisé en ce que** les fonds inférieurs de puits (130) comprennent un système mixe de détection et d'affichage (135) qui est susceptible de déterminer et d'afficher un niveau d'encrassement d'un fond inférieur de puits.

7. Procédé, destiné à faire fonctionner un dispositif de préparation de commandes, pourvu d'au moins une rangée d'étagères (10), avec au moins une étagère dotée d'une pluralité de fonds inférieurs d'étagère (100) superposés s'étendant respectivement dans un plan, avec une pluralité de puits de stockage (150), au moins un fond inférieur d'étagère (100) comprenant une structure en cadre (110), une pluralité de parois séparatrices de puits (120), une pluralité de fonds inférieurs de puits (130), et une pluralité de systèmes de blocage (140), chaque fois deux parois séparatrices de puits (120) et un fond inférieur de puits (130) définissant un puits de stockage (150) allongé, pourvu d'une extrémité de stockage (151) et d'une extrémité de déstockage (152), près des extrémités de déstockage (152) étant placé chaque fois un système de blocage (140) et à chaque fond inférieur de puits (130) étant associé un système d'appui (160) sur lequel le fond inférieur de puits (130) repose et lequel est conçu de telle sorte qu'un fond inférieur de puits (130') supplémentaire puisse être poussé sous le fond inférieur de puits (130) qui repose, et à chaque fond inférieur de puits (130) étant associé un moyen de retenue, lequel empêche un glissement du fond inférieur de puits (130) dans la direction longitudinale (x) du puits de stockage (150), lorsque le fond inférieur de puits (130) repose sur le système d'appui (160), **caractérisé en ce qu'**on relève un ancien fond inférieur de puits (130) reposant sur un système d'appui (160) près de l'extrémité déstockage ou de stockage (151, 152) du puits de stockage (130) correspondant, on pousse un nouveau fond inférieur de puits (130') sur le système d'appui, sous l'ancien fond inférieur de puits et on retire l'ancien fond inférieur de puits (130) et on fixe le nouveau fond inférieur de puits (130') contre un glissement.

8. Procédé, destiné à faire fonctionner un dispositif de préparation de commandes selon la revendication 7, près de l'extrémité de stockage, les fonds inférieurs de puits étant conçus au moins en partie de forme cunéiforme et un ancien fond inférieur de puits (130) reposant sur un système d'appui (160) étant soulevé près de l'extrémité de stockage (151) du puits de stockage (150) correspondant, par insertion d'un nouveau fond inférieur de puits (130'), près de l'extrémité de déstockage (152), le nouveau fond inférieur de puits étant complémentaire à l'extrémité de stockage (151) de l'ancien fond inférieur de puits (130).
